# EUROPÄISCHE PATENTANMELDUNG

(11) **EP 1 224 965 A1**
(43) Veröffentlichungstag der Anmeldung: **24.07.2002**
(21) Anmeldenummer: 01111978.1
(22) Anmeldetag: 21.05.2001
(51) Int. Cl.: B01D 63/16, B01D 61/18, B01D 65/08, C02F 1/44, C02F 3/12

(54) **Vorrichtung und Verfahren zur Abtrennung eines Permeats**

(30) Priorität: 21.05.2000 DE 10024594
(71) Anmelder: Berghof Filtrations- und Anlagentechnik GmbH & Co. KG., 72800 Eningen (DE)
(72) Erfinder: Günder, Berthold, 72793 Pfullingen (DE); Stoss, Werner, 72805 Lichtenstein (DE); Gross, Arthur, 72770 Reutlingen (DE)
(74) Vertreter: Forstmeyer, Dietmar, Dr. rer. nat., Dipl.-Chem.

(57) **Zusammenfassung**

Die Erfindung betrifft eine Vorrichtung und ein Verfahren zur Abtrennung eines Permeats, wobei ein Membranmodul (1) wie eine Kasette mit Membranen in ein flüssiges Gemisch getaucht wird, aus dem das Permeat abtrennbar ist. Das Membranmodul (1) kann zumindest eine Dreh- und/oder Pendelbewegung ausführen, so dass eine gleichmäßige Anströmung des Membranmodulus (1) von einem fixierten Gaseinlass (6) aus, gewährleistet ist.

## Beschreibung

Die Erfindung betrifft eine Vorrichtung und ein Verfahren zur Abtrennung eines Permeats, insbesondere von Brauchwasser aus Abwasser, wobei ein Membranmodul wie eine Kassette mit Membranen in ein Feststoff/Flüssigkeitsgemisch getaucht wird, aus dem das Permeat abtrennbar ist.

Derartige Verfahren und Vorrichtungen werden z. B. eingesetzt, um kommunales und/oder industrielles Abwasser zu reinigen, also eine Biomasse mit Hilfe von Membranen von Abwasser, das auch als Permeat bezeichnet werden kann, abzutrennen. Das biologisch vollständig gereinigte und membranfiltrierte Abwasser oder Permeat kann aufgrund der hohen Qualität, die mit der Vorrichtung und dem Verfahren nach der Erfindung zu erreichen ist, als Brauchwasser wiederverwendet werden.

Zur biologischen Reinigung von Abwässern wird häufig das sogenannte Belebungsverfahren eingesetzt, das ein Belebungs- und Nachklärbecken umfaßt. Hierbei erfolgt die biologische Reinigung der Abwässer durch suspendierte Mikroorganismen, welche im Belebungsbecken durch Einblasen von Luft mit Sauerstoff versorgt und gleichzeitig in Schwebe gehalten werden. Die Mikroorganismen werden im Nachbecken durch Sedimentation vom gereinigten Abwasser abgetrennt und im System gehalten. Das gereinigte Abwasser wird erneut dem Wasserkreislauf zugeführt.

Die Abtrennung des belebten Schlammes in Nachklärbecken ist häufig jedoch unvollständig. Dadurch gelangen Schwebstoffe in den Ablauf, welche die Ablaufwerte erheblich verschlechtern und eine Wiederverwendung des Ablaufs als Brauchwasser in der Regel ausschließen. Insbesondere Keime und Viren - potentiel le Krankheitserreger - können mit konventionellen Nachklärbecken nicht zurückgehalten werden.

Diese konventionelle Verfahrenstechnik mit Belebungsbecken und Nachklärbecken wird beispielsweise in der Patentschrift DE-OS 44 15 637 (Verfahren und eine Vorrichtung zur Reinigung und Aufbereitung von Waschwässern aus Fahrzeugwaschanlagen) beschrieben. Bei diesem biologischen Reinigungsverfahren erfolgt der Rückhalt der Mikroorganismen durch Sedimentation im Nachklärbecken. Ein Nachteil dieses Verfahren besteht darin, dass sich dieses Verfahren als aufwendig erweist, da die Nachklärbecken viel Platz in Anspruch nehmen und außerdem das Erstellen dieser Becken teuer ist. Darüber hinaus ist die Reinigung nicht ausreichend gründlich, so dass das in den Wasserkreislauf zurückgeführte Wasser häufig nur als Brauchwasser schlechter Qualität verwendet werden kann.

Eine Verbesserung dieser Verfahrensvariante der Abtrennung des belebten Schlammes in Nachklärbecken durch einen Sedimentationsvorgang ist die Abtrennung mit Hilfe von Membranen, also durch eine Membranfiltration. Die Membranfiltration ist ein Trennvorgang, bei dem die verschiedenen Inhaltsstoffe mit Hilfe einer selektiv durchlässigen Membran getrennt werden können. Bei einer Membranfiltration erfolgt die Trennung hauptsächlich durch einen Siebeffekt. Das bedeutet, dass alle Inhaltsstoffe, die größer als der Porendurchmesser der Membran sind (z. B. Mikroorganismen), zurückgehalten werden, und nur Stoffe, die durch die Poren fließen können (z. B. Flüssigkeiten wie Wasser), die Membran passieren. Das durch die Membran hindurchtretende Wasser wird als Permeat bezeichnet.

Aus dem Stand der Technik (DE-OS 44 12 890) sind außerdem ein biologisches Verfahren und eine Vorrichtung zur Reinigung von Wasser, insbesondere aus einem Kompostierungsprozess, bekannt. Der Reinigungsprozess findet hierbei in einem Bioreaktor statt. Zum Rückhalt der Mikroorganismen im Bioreaktor wird das Wasser anschließend gefiltert, insbesondere ultragefiltert. Die hierzu notwendigen Drücke liegen in einem Bereich von 5 bis 10 bar. Die Trennung der Mikroorganismen von dem gereinigten Wasser wird durch eine Membran mit geeigneter Porengröße ermöglicht. Zur Belüftung wird das Gemisch mit Sauerstoff begast und umgerührt. Als nachteilig erweist sich bei diesem Verfahren, daß wegen der hohen Drücken eine entsprechende Pumpleistung notwendig ist, welche das Verfahren wiederum teuer und aufwendig gestaltet.

In der EP 0662341 wird ein Membranmodul beschrieben, welches auch zur Abwasserreinigung eingesetzt werden kann und aus parallel angeordneten Platten besteht. Das Modul wird allerdings in einem Behälter fest montiert und zur Abreinigung der an der Membranaußen- oder oberfläche zurückgehaltenen Feststoffe wird das Membranmodul einer gleichmäßige Belüftung ausgesetzt. Die gleichmäßige Luftverteilung unter dem Modul wird dadurch erzielt, dass zwischen Luftaustritt und Modulunterkante ein Abstand von mehr als 500 mm eingehalten wird. Zudem bestehen die Platten aus einem steifen Kunststoffmaterial, bei dem die Membranen beidseitig aufgeschweißt sind und welches durch das Anbringen von Vertiefungen in der steife Kunststoffplatte innen aufwendig gestaltet ist, damit die Ableitung des Permeats ermöglicht wird.

Desweiteren wird in der EP 0510328 A2 ein Verfahren mit einem Membranmodul zur Filtration von Abwasser beschrieben. Allerdings wird hier die Abreinigung der Membran von den zurückgehaltenen Inhaltsstoffen dadurch erreicht, daß unter dem Membranmodul ein Rühraggregat installiert wird, welches eine Aufwärtsströmung zwischen den Membrankassetten erzwingt und so die Abreinigung der Membranoberfläche bewirkt.

Die Herstellung von Membranplatten und insbesondere die Befestigung der Membranen auf starren Platten wird in der EP 0 653 240 A1 beschrieben. Hierbei werden die Membranen im Randbereich durch Klebung oder Ultraschallverschweißung direkt auf den Kunststoffplatten befestigt. Auf diesen Herstellungsprozess wird auch in der EP 0662341 eingegangen. Zusätzlich wird hier festgelegt, dass die Stützplatten aus Kunststoff bestehen und die Permeatabführung im Inneren der Kassette durch Kanäle ermöglicht wird.

In einer anderen Patentschrift (US5248424) werden Hohlfasermembranen und eine Methode zur Reinhaltung dieser Fasern während der Filtration eines Substrates und Abzug von Permeat beschrieben. Dabei werden flexible Hohlfasern mit einer Länge von mehr als 0,5 m an beiden Enden in Permeatsammler eingeklebt. Die Hohlfasern weisen einen Außendurchmesser zwischen 20 µm und 3 mm und eine Wandstärke zwischen 5 µm und 2 mm auf. Die Trenngrenze der Membran, also die Größe der Partikel, die noch zurückgehalten werden können, wird zu 0,001 µm bis 1,0 µm angegeben. Die Abreinigung der Hohlfasern erfolgt nach dieser Beschreibung dadurch, indem Luft unter das Modul eingeblasen wird und die aufsteigenden Luftblasen die Fasern in Bewegung versetzten. Das Membranmodul ist dabei in ein Becken getaucht und bewegt sich nicht, sondern es werden nur die Fasern in Schwingung versetzt.

Die bekannten Verfahren haben alle den Nachteil, dass sie entweder eine ungleichmäßige Reinigung der Membranflächen in Kauf nehmen mit einer notfalls erfolderlichen Abstellung der Filtration wegen Reinigung, oder einen erhöhten Druck, Temperatur und/oder eine Pumpe vorsehen. Zudem zeigen sie keine Flexibilität hinsichtlich der Anzahl an eingesetzten Membranmodulen in Abhängigkeit vom Verschmutzungsgrad des Abwassers.

Aufgabe der Erfindung ist es, eine Vorrichtung und ein Verfahren zur Abtrennung eines Permeats aus einem Flüssigkeits-/Feststoffgemisch zu schaffen, das kontinuierlich und ohne äussere Einwirkung wie Druck, Pumpleistung und/oder Temperatur mit hoher Leistung arbeitet und an den jeweiligen Gehalt an abzutrennenden Feststoffen flexibel anpassbar ist.

Gegenstand der Erfindung ist eine Vorrichtung zur Abtrennung eines Permeats aus einem Flüssigkeits-/Feststoffgemisch, dadurch gekennzeichnet, dass zumindest ein Membranmodul mit integrierter Permeatabführung so in das Flüssigkeits-/Feststoffgemisch eingetaucht und befestigt ist, dass es zumindest eine Pendel- und/oder Drehbewegung ausführen kann. Ausserdem ist Gegenstand der Erfindung ein Verfahren zur Abtrennung eines Permeats aus einem Flüssigkeits-/Feststoffgemisch, bei dem das Permeat über ein Membranmodul aus dem Flüssigkeits-/Feststoffgemisch abgetrennt wird, wobei das Membranmodul während des Betriebs in das Flüssigkeits/Feststoffgemisch eingetaucht ist und zumindest eine Pendel- und/oder Drehbewegung ausführt. Schließlich ist Gegenstand der Erfindung die Verwendung der Vorrichtung zur Abtrennung eines Permeats zur Abwasserreinigung.

Durch die erfindungsgemäße Vorrichtung und das erfindungsgemäße Verfahren kann die Membran des Membranmoduls kontinuierlich oder diskontinuierlich von Feststoffen gereinigt werden, die sich auf der Membran abgelagert haben. Dadurch kann das Trennverfahren kontinuierlich betrieben werden, ohne daß eine Unterbrechung zur Reinigung der Membran nötig wäre.

Als Membranmodul wird hier jede Art von Bauteil bezeichnet, durch das mit Hilfe einer Membran, die quasi als Sieb wirkt, Feststoffanteile und Flüssigkeitsanteile eines Feststoff/Flüssigkeitsgemisches getrennt werden können. Derartige Membranmodule sind an sich bekannt.

Die Membran, die erfindungsgemäß eingesetzt werden kann, ist nach einer Ausführungsform ein flächiges Gebilde zur Stofftrennung und wird für die Anwendung in Modulen konfiguriert. Hier haben sich verschiedene Varianten entwickelt, von denen das konventionelle Rohrmodul (innen durchströmt), die aussen beschichtete Rohrmembran (aussen umströmt), das Plattenmodul mit Flachmembran und das Hohlfasermodul verbreitete Varianten sind.

Bei der Flachmembran werden in der Regel beidseitig auf eine dünne Platte, auch als Kassette oder Stützplatte bezeichnet, Membranbeschichtungen aufgezogen. Zwischen der Membran und der Platte kann noch ein Stützvlies angeordnet sein. Die Filtration erfolgt von aussen nach innen, innen fließt das Permeat ab und aussen bleiben die Feststoffe haften. Die Platte kann eine Struktur, wie Kanäle, haben oder glatt ausgebildet sein. Bevorzugt wird eine Platte eingesetzt, die keine Strukturen hat.

Die einzelnen Flachmembranen werden parallel mit einem Abstand entlang eines Permeatsammlers oder einer Permeatsammelleitung angeordnet. Die Platte übernimmt damit gleichzeitig das Ableiten des Permeats zu einer oder mehreren Abnahmestellen oder Bohrungen entlang dem Permeatsammler. Die Flachmembranen werden vorgefertigt und dann mit passenden Abstandsstücken gestapelt in ein Gehäuse mit Permeatsammler eingebaut. Bevorzugt ist das Gehäuse so konstruiert, dass einzelne Membranen dazu- und/oder herausgenommen werden können. Dabei ist es insbesonders bevorzugt, wenn dies ohne Unterbrechung des Verfahrens möglich ist. Durch das beidseitige Aufbringen von Membranbeschichtungen auf eine Platte entsteht ein umseitig geschlossener Raum, der durch eine oder mehrere Öffnungen erschlossen ist. Durch diese Öffnungen kann das Permeat abfließen.

Das Hohlfasermodul besteht aus dünnen, hohlen Fasern mit einem Innendurchmesser von 0,2 bis 6 mm. Die Fasern, die in der Regel flexibel sind, werden am oberen und unteren Ende in Permeatsammler eingeklebt. Die Filtration erfolgt beim Hohlfasermodul von außen nach innen und das Permeat fließt über die stirnseitigen Permeatsammler in eine Ablaufleitung.

Die Reinigung der Membran kann durch einen z.B. auf das Modul gerichteten, z.B. punktförmigen Strom oder Strahl eines Mediums erfolgen, der durch die Bewegung des Moduls alle Stellen der Membran erreichen kann, auf denen Feststoffe abgelagert sein können. Der Strom oder Strahl kann kontinuierlich oder diskontinuierlich sein; z.B. kann es sich um Blasen etc. handeln. Vorzugsweise treffen der Strahl, der Strahl oder die Blasen das Modul von unten und steigen vorzugsweise an der Membran empor. Eine Reinigungswirkung kann auch durch die Bewegung des Moduls in der Flüssigkeit entstehen.

Vorzugsweise wird das Membranmodul als Pendelmodul an einem Drehlager aufgehängt und ist neben der Pendelbewegung auch zu einer Drehbewegung um mindestens eine Achse befähigt. Durch die Drehbewegung wird erreicht, dass z.B. ein unter dem Modul aus einer z.B. punktförmigen Quelle eingeblasenes Medium, wie ein Gas, z.B. Luft, nicht an nur einer Stelle der aussen mit Feststoffen behafteten Membran aufsteigt und eine ungleichmäßige Abreinigung der Membranen (insbesondere Flach- bzw. Rohrmembranen) von zurückgehaltenen Partikeln bewirkt, sondern dass auf der gesamten Membranfläche der gleiche Reinigungseffekt auftritt. Durch diese vorteilhafte Konstruktion des z.B. drehbar gelagerten Pendelmoduls kann der sonst erforderliche große Abstand zwischen Lufteinlass und Unterkante der Membran, z.B. der Flachmembran, vermieden werden.

Die Pendelbewegung des Membranmoduls entsteht aufgrund des turbulent aufsteigenden Luft/Schlamm-Gemisches auch ohne äußeren Eingriff. Allerdings ist es auch oder zusätzlich möglich, durch einen Erreger dem Membranmodul eine definierte Schwingung aufzuprägen. Die Erregung kann dabei mit einer außen angebrachten Vorrichtung erfolgen, durch periodisches Einblasen von seitlich angebrachten Lufttaschen oder durch periodisches Anströmen mit einem Flüssigkeitsstrahl oder durch eine beliebige Kombination dieser Maßnahmen. Das Pendeln bewirkt neben der bereits erwähnten gleichmäßigen Verteilung des Luft/Schlammgemisches unter den Membranen eine zusätzliche Geschwindigkeitskomponente auf der Membranoberfläche. Dies führt ebenfalls zu einer effektiven Abreinigung der Membranoberfläche und zu einem dauerhaften und leistungsfähigen Betrieb der Filtrationseinheit.

Vorteilhafterweise wird die Pendel- und/oder Drehbewegung so durchgeführt, daß das Membranmodul nicht an Behälterwände stößt.

Das Membranmodul umfaßt in vorteilhafter Weise ein oben und/oder unten offenes Gehäuse mit darin befindlichen Membranen. Die Membranen sind bevorzugt als Flachmembranen oder als Rohrmembranen ausgebildet.

Die Rohrmembranen mit einem Außendurchmesser von 4 bis 13 mm und einer Länge von 350 bis 3000 mm werden vorzugsweise außen beschichtet, so dass der Filtrationsprozess von außen nach innen erfolgt. Diese Rohrmembranen werden an einem oder an beiden Enden in einen Permeatsammler befestigt, in welchem die Ableitung des Permeats erfolgt. Bei Befestigung der Rohrmembranen nur an einer Stelle ist das freie Ende der Rohrmembranen bevorzugt verschlossen. Die Anordnung der Rohrmembranen in einem Permeatsammler erfolgt vorteilhafter Weise in einer Reihe mit bis zu 100 Rohrmembranen aneinander. Die Permeatsammler sind innen mit einem Strömungskanal ausgebildet, welcher die Ableitung des Permeats aus den Rohrmembranen an eine Austrittsstelle ermöglicht. Die einzelnen Permeatsammler sind wiederum parallel nebeneinander mit einem Abstand zwischen 3 und 15 mm zueinander angeordnet. Die Permeatsammler können oben oder unten im Gehäuse befestigt werden.

Die Flachmembranen bestehen vorteilhafter Weise aus flexiblen und glatten Platten, z.B. aus einem dünnen Edelstahlblech, einer dünnen Kunststoffplatte und/oder Folie, die beidseitig mit einer Flachmembran bespannt ist. Die Befestigung der Flachmembranen auf den dünnen und flexiblen Stützplatten erfolgt bevorzugt durch einen einfachen Klemmmechanismus. Dadurch können komplizierte Klebe- und/oder Schweißtechniken vermieden werden. Die Stützplatten sind bevorzugt glatt und haben, ebenfalls bevorzugt, keine Kanäle zur Permeatabführung. Die Permeatabführung aus den Platten erfolgt beispielsweise durch zwei Abgänge. Durch ein dünnes Stützvlies auf der Rückseite der Membran wird das Permeat zur Platte und von dort zu den Permeatabgängen geleitet. Die Permeatabgänge der einzelnen Platten werden dabei z.B. durch einen quadratischen Permeatsammler (Vierkantrohr) miteinander verbunden. Auf vorteilhafte Weise werden die Stützplatten an den Ecken abgerundet und so wird eine umlaufende Befestigung des Klemmmechanismus erleichtert.

Weitere Vorteile und vorteilhafte Ausgestaltungen der Erfindung sind der nachfolgenden Beschreibung, der Zeichnung und den Ansprüchen zu entnehmen.

In der Zeichnung sind Ausführungsbeispiele einer erfindungsgemäßen Vorrichtung dargestellt und im folgenden näher beschrieben. Es zeigen:
- Fig. 1: die erfindungsgemäße Vorrichtung in einem Behälter hängend angeordnet;
- Fig. 2: die erfindungsgemäße Vorrichtung in einem Behälter schwimmend angeordnet,
- Fig. 3: zwei Querschnitte einer außen beschichteten Rohrmembran Längs- und Queransicht),
- Fig. 4: die Anordnung der außen beschichteten Rohrmembranen in einer Reihe
- Fig. 5: den schematischen Aufbau einer Kassette mit Rohrmembranen,
- Fig. 6: einen teilweisen Schnitt durch den Randbereich der Platten
- Fig. 7: einen teilweisen Schnitt durch die Membranplatten im Bereich der Permeatabführung.

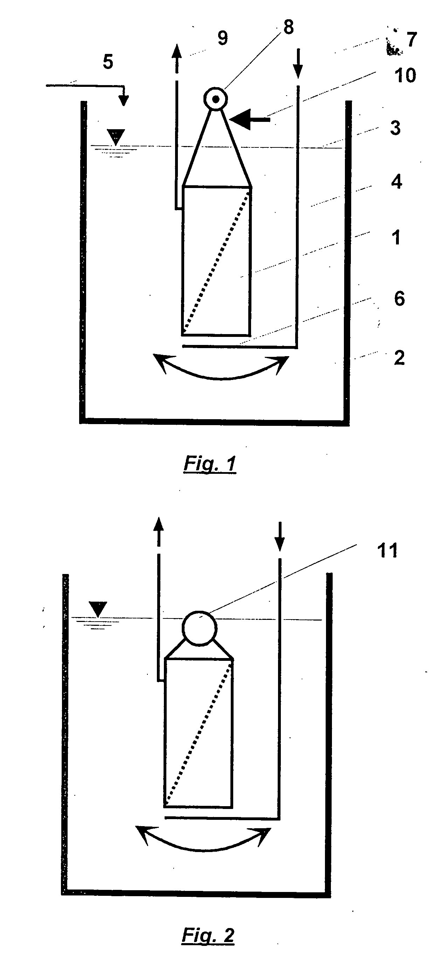

Die in Fig. 1 dargestellte Vorrichtung, zeigt das Membranmodul (1) in einem Behälter (2) hängend angeordnet. Der Behälter (2) ist bis zu einem Flüssigkeitsniveau (3) mit einem Stoffgemisch (z. B. belebter Schlamm) (4) befüllt und wird mit Zulauf (5) beschickt. Durch eine Belüftungsvorrichtung (6) wird ein verdichtetes Gas (7), vorzugsweise Luft, direkt unter das Membranmodul (1) geführt. Der Gaseinlass der Belüftungsvorrichtung (6) ist bevorzugt fixiert, kann aber auch flexibel sein.

Das hier erzeugte Gas/Flüssigkeitsgemisch steigt über das Membranmodul (1) nach oben und führt einerseits zur Abreinigung der Membranoberfläche von zurückgehaltenen Stoffen und andererseits zur Schwingungsanregung. Dadurch kann sich das Membranmodul (1) um mindestens eine Achse (8) bewegen. Durch Aufbringen einer transmembranen Druckdifferenz, vorzugsweise durch permeatseitigen Unterdruck, wird Permeat (9) durch die Membran dem System entnommen. Dabei werden alle Partikel (z.B. Bakterien), die größer sind als der Porendurchmesser der Membran, auf der Membranoberfläche zurückgehalten. Der Porendurchmesser der Membran kann beispielsweise im Bereich von 0,01 bis 10µm liegen. Die Stoffe, die die Poren nicht passieren, haften aussen an der Membran und werden durch das aufsteigende Gas/Flüssigkeitsgemisch abgereinigt. Die aufgrund der turbulenten Gaseinpressung entstehenden Schwingungen des Membranmoduls (1) können durch einen Schwingungserreger (10) noch verstärkt werden. Durch die punktierte Linie, die das Membranmodul (1) diagonal durchkreuzt, wird angedeutet, dass hier eine Flachmembran mit einer Stützplatte und beidseitiger Membranbeschichtung schematisch dargestellt ist. Der Doppelpfeil unter dem Membranmodul (1) zeigt die Richtung an, in der das Membranmodul (1) pendelt. Die Drehrichtung des Membranmoduls (1) um die Achse (8) verläuft quer dazu. Die Aufhängung des Membranmoduls (1) kann als einfaches Drehlager oder als Punktaufhängung ausgebildet sein.

Die in Fig. 2 dargestellte Vorrichtung unterscheidet sich von der in Fig. 1 dargestellten lediglich dadurch, dass das Membranmodul (1) mittels eines geeigneten Schwimmkörpers (11) schwimmend im Behälter angebracht ist.

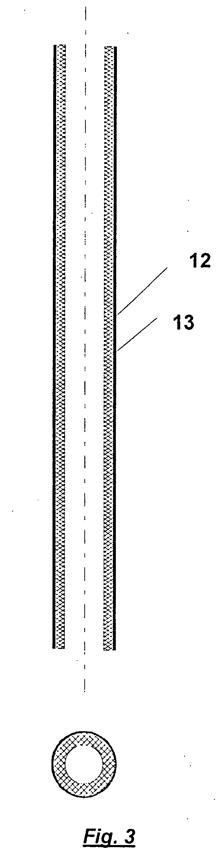

Fig. 3 zeigt den Aufbau einer außen beschichteten Rohrmembran mit außen liegender Membran oder Trennschicht (12) und innenliegendem Stützvlies (13) einmal im Längs-Querschnitt und einmal in der Draufsicht.

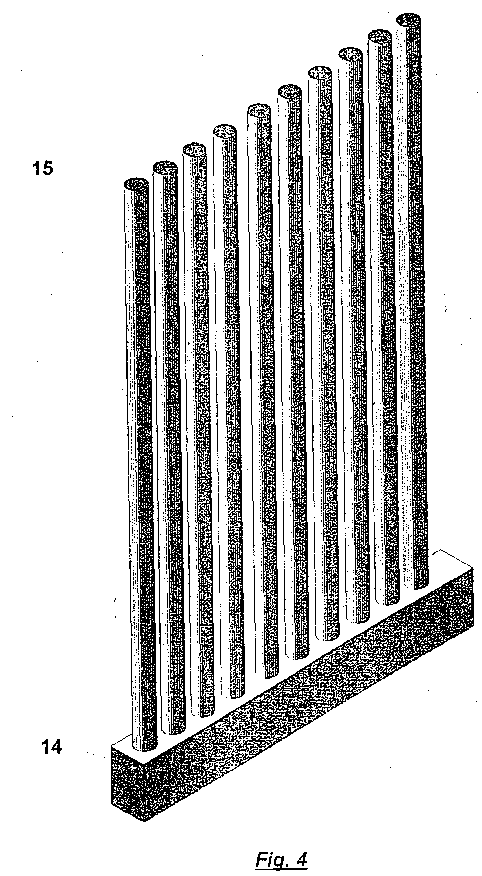

Fig. 4. zeigt die reihenförmige Anordnung der Rohrmembranen an einen Permeatsammler (14). Bis zu 100 Rohrmembranen können dicht aneinander in einer Reihe an einem Permeatsammler (14) befestigt werden und haben am freien Ende einen Verschluß. Es kann auch an beiden Enden ein Permeatsammler (14) angebracht sein. Ein Verschluß (15) entfällt dann.

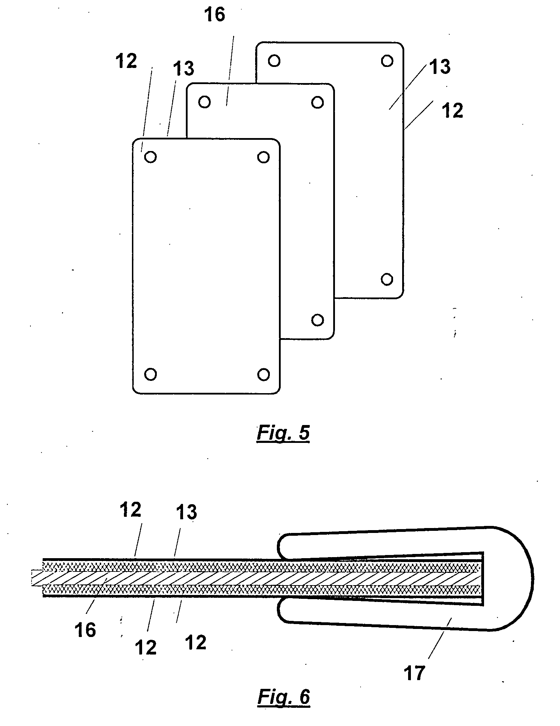

Fig. 5 zeigt den Aufbau der Membrankassetten mit Flachmembranen, bestehend aus zwei Membranen (12) mit Stützvlies (13) und einer dünnen, glatten Platte (16) mit einer Dicke von kleiner/gleich 2 mm. Die Ecken der Platte und der Membranen sind abgerundet, damit der Klebe/Klemmmechanismus daran befestigt werden kann.

Die Fig. 6 zeigt einen Schnitt durch den Randbereich einer Flachmembran. Zu sehen ist ausser den bereits aus Figur 5 bekannten Teilen den beiden Membranen (12), dem mittig dazwischen angeordneten Stützvlies (13) und der dünnen glatten Platte (16) auch das Klemmprofil (17), mit welchem die Membranen (12) an die dünne, glatte Platte (16) befestigt werden.
Die Klemmvorrichtung wie dieses Klemmprofil (17) ermöglichen, dass auf aufwendige Klebe- und Schweißmethoden zur Montage der Flachmembran verzichtet werden kann und fehlerhafte Membranen problemlos ausgetauscht werden können.

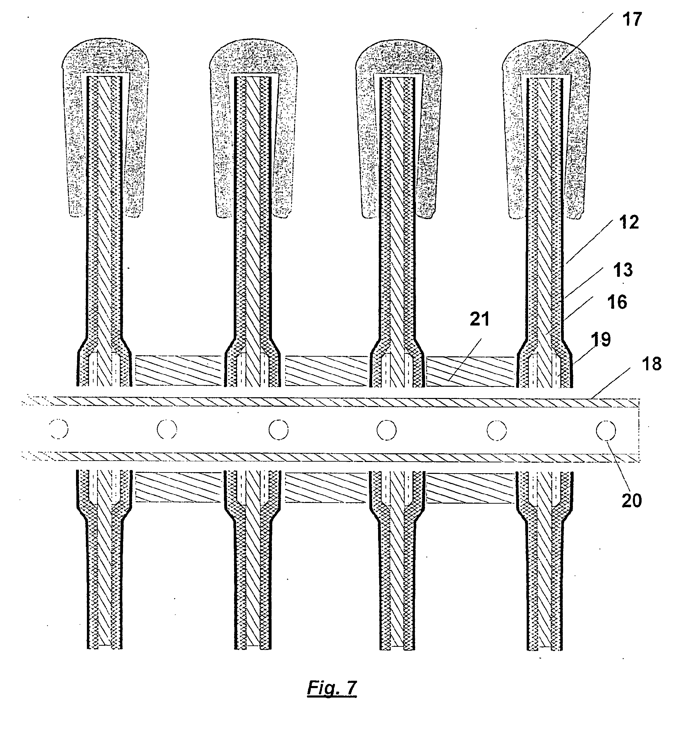

Fig. 7. zeigt einen Schnitt durch das Membranmodul mit der Permeatabführung (18). Diese besteht aus einem Vierkantrohr mit allseitig angebrachten Bohrungen (20) zur Ableitung des Permeats. Durch eine der beiden Membranen (12) wird das Permeat über das Stützvlies (13) auf die dünne Platte (16) geleitet und von dieser gelangt das Permeat durch Distanz- und Ableitungsscheiben (19) in den außerhalb des Vierkantrohres gelegenen Zwischenraum und von hier durch die Bohrungen (20) in das Vierkantrohr. Das Permeat wird dann an einer oder beiden Seiten des Vierkantrohres angezogen. Die einzelnen Flachmembranen sind mit Abstandhalter (21) gegeneinander fixiert. Bei dieser bevorzugten Ausführungsform der Flachmembran ist es nicht erforderlich, zur Ableitung des Permeats die dünne Platte zu strukturieren (beispielsweise durch die Ausbildung von Kanälen), sondern es genügt einfach eine glatte Platte, damit das Permeat ablaufen kann.

Die Erfindung betrifft eine Vorrichtung und ein Verfahren zur Abtrennung eines Permeats, wobei ein Membranmodul wie eine Kasette mit Membranen in ein flüssiges Gemisch getaucht wird, aus dem das Permeat abtrennbar ist. Das Membranmodul kann zumindest eine Dreh- und/oder Pendelbewegung ausführen, so dass eine gleichmäßige Anströmung des Memebranmoduls von einem fixierten Gaseinlass aus, gewährleistet ist.

Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszeichenliste

- 1: Pendelmodul
- 2: Behälter
- 3: Flüssigkeitsniveau
- 4: Stoffgemisch
- 5: Abwasser
- 6: Belüftungsvorrichtung
- 7: Gas
- 8: Achse
- 9: Permeat
- 10: Schwingungserreger
- 11: Schwimmkörper
- 12: Membran
- 13: Stützvlies
- 14: Stützplatte
- 15: Klemmprofil
- 16: Permeatabführung aus Vierkantrohr
- 17: Distanzscheiben
- 18: Bohrungen
- 19: Zwischenraum

## Patentansprüche

1. Vorrichtung zur Abtrennung eines Permeats aus einem Flüssigkeits-/Feststoffgemisch, **dadurch gekennzeichnet, dass** zumindest ein Membranmodul mit Permeatabführung in das Flüssigkeits-/Feststoffgemisch so eingetaucht und angebracht ist, dass es zumindest eine Pendel- und/oder Drehbewegung ausführen kann.

2. Vorrichtung nach Anspruch 1, bei der das Membranmodul vollständig in das Flüssigkeits-/Feststoffgemisch eingetaucht ist.

3. Vorrichtung nach Anspruch 1 oder 2, bei der das Membranmodul so an einer Halterung befestigt ist, dass es neben einer Pendelbewegung auch eine Drehbewegung um zumindest eine Achse ausführen kann und/oder angehoben oder gesenkt werden kann.

4. Vorrichtung nach einem der vorstehenden Ansprüche, bei der die Halterung ein Drehlager ist.

5. Vorrichtung nach einem der vorstehenden Ansprüche, bei der die Halterung schwimmend im Flüssigkeits-/Feststoffgemisch angeordnet ist.

6. Vorrichtung nach einem der vorstehenden Ansprüche, bei der die Halterung über dem Flüssigkeits-/Feststoffgemisch so angeordnet ist, dass zumindest ein Membranmodul beim Betrieb der Vorrichtung hinzugefügt oder entfernt werden kann.

7. Vorrichtung nach einem der vorstehenden Ansprüche, bei der das Membranmodul eine integrierte Permeatabführung hat.

8. Vorrichtung nach einem der vorstehenden Ansprüche, bei der das Membranmodul über mindestens eine Öffnung an eine Permeatsammelleitung angeschlossen ist und/oder mittels einer Klemmvorrichtung zusammengehalten wird.

9. Vorrichtung nach einem der vorstehenden Ansprüche, bei der die Permeatsammelleitung ein Vierkantrohr ist.

10. Vorrichtung nach einem der vorstehenden Ansprüche, bei der ein Erreger vorgesehen ist, durch den das Membranmodul bewegbar ist.

11. Vorrichtung nach einem der vorstehenden Ansprüche, bei der der Erreger ein Medium wie ein Gas und/oder eine Flüssigkeit umfaßt.

12. Vorrichtung nach einem der vorstehenden Ansprüche, bei der das eingeleitete Medium das Membranmodul in Bewegung versetzt und/oder die Membran von den anhaftenden Feststoffen reinigt.

13. Vorrichtung nach einem der vorstehenden Ansprüche, bei der der Erreger ein mechanischer Schwingungserreger ist.

14. Vorrichtung nach einem der vorstehenden Ansprüche, bei der das Membranmodul zumindest eine Flachmembran, eine Rohrmembran und/oder ein Hohlfasermodul umfasst.

15. Vorrichtung nach einem der vorstehenden Ansprüche, bei der das Membranmodul zumindest eine Membran mit einer Trenngrenze zwischen 0,01 und 10 µm umfasst.

16. Vorrichtung nach einem der vorstehenden Ansprüche, bei der das Membranmodul zumindest eine Rohrmembran umfasst, die einen Aussendurchmesser von 4 bis 13 mm und/oder eine Länge von 300 bis 3000 mm hat.

17. Vorrichtung nach einem der vorstehenden Ansprüche, bei der das Membranmodul zumindest zwei parallel zueinander angeordnete Rohrmembranen umfasst, die an einem Ende oder an beiden Enden an einen Permeatsammler anschließen, wobei im Falle der einseitigen Befestigung an den Permeatsammler das freie Ende der Rohrmembran verschlossen ist.

18. Vorrichtung nach einem der vorstehenden Ansprüche, bei der die zumindest zwei Membranen parallel und mit einem Abstand von 3 bis 15 mm zueinander angeordnet sind.

19. Verfahren zur Abtrennung eines Permeats aus einem Flüssigkeits-/Feststoffgemisch, bei dem ein Permeat über ein Membranmodul aus einem Flüssigkeits-/Feststoffgemisch abgetrennt wird, wobei das Membranmodul während des Betriebs in das Flüssigkeits/Feststoffgemisch eingetaucht ist und zumindest eine Pendel- und/oder Drehbewegung ausführt.

20. Verfahren nach Anspruch 19, bei dem die Pendel- und/oder Drehbewegung durch einen Erreger im Flüssigkeits-/Feststoffgemisch erzwungen wird.

21. Verfahren nach einem der Ansprüche 19 oder 20, bei dem durch die Bewegung des Membranmoduls eine gleichmäßige Anströmung des Membranmoduls mit einem aus einer punktförmigen Quelle austretenden Medium erreicht wird.

22. Verwendung der Vorrichtung zur Abtrennung eines Permeats zur Abwasserreinigung.
